# EUROPEAN PATENT APPLICATION

(11) **EP 1 275 468 A1**
(43) Date of publication of application: **15.01.2003**
(21) Application number: 00915474.1
(22) Date of filing: 10.04.2000
(51) Int. Cl.: B23Q 3/12

(54) **TOOL HOLDER**

(71) Applicant: Pascal Kabushiki Kaisha, Itami-shi, Hyogo-ken 664-0006 (JP)
(72) Inventor: MIYAZAWA, Hiroshi, Akashi-shi, Hyogo 674-0074 (JP)
(74) Representative: Leson, Thomas Johannes Alois, Dipl.-Ing.
(86) International application number: PCT/JP00/02338
(87) International publication number: WO 01/076814

(57) **Abstract**

A tool holder (1) that can provide firm securing to a main shaft (2) is provided. On this tool holder (1), a plurality of elastic engagement pieces (13) are disposed at the outer perimeter section of a shank (12) at a plurality of positions along the axial center. The plurality of elastic engagement pieces (13) can abut the inner surface of a tapered hole (3) and be elastically deformed slightly in the radial direction. When the plurality of elastic engagement pieces (13) are elastically deformed radially and tightly abutted against the inner surface, the plurality of elastic engagement pieces (13) links roughly the entirety of the shank (12) to the inner surface of the tapered hole (3) with a uniform force. Furthermore, in this state, an elastic flange (15) is elastically deformed and reliably abuts the end surface of the main shaft (2).

## Description

### Technical field of the invention

The present invention relates to a tool holder that allows a tool to be fixed securely along a main shaft of a machine tool.

### Background technology

Conventionally, in machining tools such as drill presses, milling machines, and machining centers, a tool holder is attached to the end of a main shaft to support a tool. The main shaft rotates the tool to perform machining on the workpiece. Since the tool holder is removably attached to the main shaft, the main shaft is equipped with a retraction mechanism to draw in and secure the shank of the tool holder.

The tool holder includes: a tool support section for attaching a tool; a shank including a tapered outer perimeter surface; a pull stud secured to the shank; and a flange having a larger diameter than the tapered hole. The retraction mechanism pulls in the tool holder and fits and secures the shank to the tapered hole of the main shaft.

High machining precision of 1 micron error or less is demanded of recent machining tools. These machining tools must perform machining while rotating the main shaft at high speeds of 3000 - 4000 rpm. Thus, the tool holder and the main shaft rotating at high speeds tend to experience vibrations, which can be a factor in reduced machining precision. To prevent reduced machining precision, it would be desirable to increase securing strength by tightly securing the entire shank of the tool holder against the tapered hole. However, due to machining tolerances in the tapered hole of the main shaft and the tool holder, the tool can heat up while machining is being performed, resulting in thermal expansion of the main shaft and the tool holder. This makes it almost impossible to firmly and tightly secure the entire shank of the tool holder against the tapered hole of the main shaft. Furthermore, it is impossible to have the flange of the tool holder tightly abutting the end surface of the main shaft while having the shank of the tool holder tightly secured in the main shaft. Thus, standard conventional tool holders are not set up so that the flange abuts the end surface of the main shaft.

Next, various tool holders from conventional technologies will be described.

In Japanese laid-open patent publication number 8-108302, a tool holder includes: a main holder unit including a shank and a flange; a sleeve outwardly fitted to the shank so that it can move along the axial direction relative to the shank and having an outer perimeter surface with the same tapered shape as the tapered hole; and an elastic member interposed between the flange and the sleeve. The sleeve is divided at one section along the perimeter, and the elastic body is mounted in this gap. When the retraction mechanism draws in the tool holder, the flange abuts the end surface of the main shaft. The sleeve is pressed via the elastic member toward the base end of the main shaft. The sleeve is narrowed and engages with the tapered hole and is also coupled with the shank. In Japanese laid-open patent publication number 9-248727, a tool holder is formed as described above, but instead of the sleeve with a division at one section along the perimeter, a sleeve with an inner groove at one section along the perimeter is used.

With these tool holders, the overall sleeve diameter is narrowed when the retraction mechanism pulls in the tool holder. As a result, the tapered outer perimeter surface of the sleeve cannot be tightly fitted and secured against the tapered hole, making it difficult to have a uniform force over the entire perimeter to provide coupling with the inner surface of the tapered hole. Also, a larger number of parts is required and the structure is more complex, thus increasing manufacturing costs.

In a tool holder presented in Japanese laid-open patent publication number 7-96437, a ring-shaped groove is formed at the boundary between the shank and the flange. This ring-shaped groove allows a section of the flange to be formed with less thickness. When this tool holder is drawn in by the retraction mechanism, the flange abuts the end surface of the main shaft and is elastically deformed slightly, acting as a disc spring. This provides engagement between the shank and the tapered hole. However, the structure of the majority of the shank is no different than the conventional shank structure, so roughly the same problems as the conventional tool holders are involved.

The object of the present invention is to provide a tool holder that can provide a firm, elastic fit of the entirety of a shank in a tapered hole of a main shaft and that allows the flange to elastically abut the outer end surface of the main shaft so that vibrations are prevented and greater stability is achieved.

### Disclosure of the invention

The present invention provides a tool holder including a tool support section for attaching a tool and a shank removably fitted and secured to a tapered hole of a main shaft of a machining tool. A plurality of elastic engagement pieces is capable of abutting an inner surface of the tapered hole and being elastically deformed slightly in a radial direction are disposed at an outer perimeter section of the shank at a plurality of positions along an axial center. The shank is fitted to the tapered hole of the main shaft and is secured to the main shaft with the plurality of elastic engagement pieces elastically deformed in the radial direction.

In this tool holder, the shank is fitted and secured in the tapered hole with the plurality of elastic engagement pieces abutting the inner surface of the tapered hole and being elastically deformed slightly in the radial direction. Thus, the plurality of elastic engagement pieces are elastically deformed radially to tightly abut the inner surface of the tapered hole, and these elastic engagement pieces allow the entire shank to be fitted into the tapered hole of the main shaft with a uniform force. This provides firm securing of the tool holder to the main shaft. Vibrations generated at the main shaft can be dampened even when the main shaft is rotated at high speeds, thus improving machining precision.

It would be desirable to have a plurality of ring-shaped grooves formed at the outer perimeter section of the shank at a predetermined interval along the axial center, the plurality of ring-shaped grooves and the plurality of elastic engagement pieces being arranged in an alternating manner along the axial center. The plurality of elastic engagement pieces are formed integrally with the shank by forming the plurality of ring-shaped grooves.

It would be desirable to have the elastic engagement pieces sloped relative to a plane perpendicular to the axial center of the shank. In this case, it would be desirable to have the elastic engagement pieces sloped toward a narrower end of a tapered shape of the shank. However, it would be also possible to have the elastic engagement pieces formed parallel to a plane perpendicular to the axial center of the shank.

It would be desirable to have a plurality of grooves extending longitudinally along the shank formed at the outer perimeter section of the shank in a symmetrical arrangement relative to the axial center.

It would be desirable to have an elastic flange abutting an outer end surface of the main shaft and elastically deforming toward the axial center when the tool holder is mounted on the main shaft. In this case, it would be possible to have the elastic flange formed with a ring shape, a ring-shaped groove formed at a radially inward position on the elastic flange, and a ring-shaped sloped groove formed at a radially outward position on the elastic flange.

It would also be possible to have the plurality of elastic engagement pieces formed as a plurality of collar-shaped members secured to the outer perimeter section of the shank. It would also be possible to have the plurality of elastic engagement pieces formed as a plurality of flat springs mounted on the outer perimeter section of the shank.

It would also be possible to have a cross-section shape of the tapered hole and the shank along a plane perpendicular to the axial center forming a non-circular shape capable of transferring rotational torque so that rotational torque can be transferred from the tapered hole of the main shaft to the shank without using a key.

### Description of the drawings

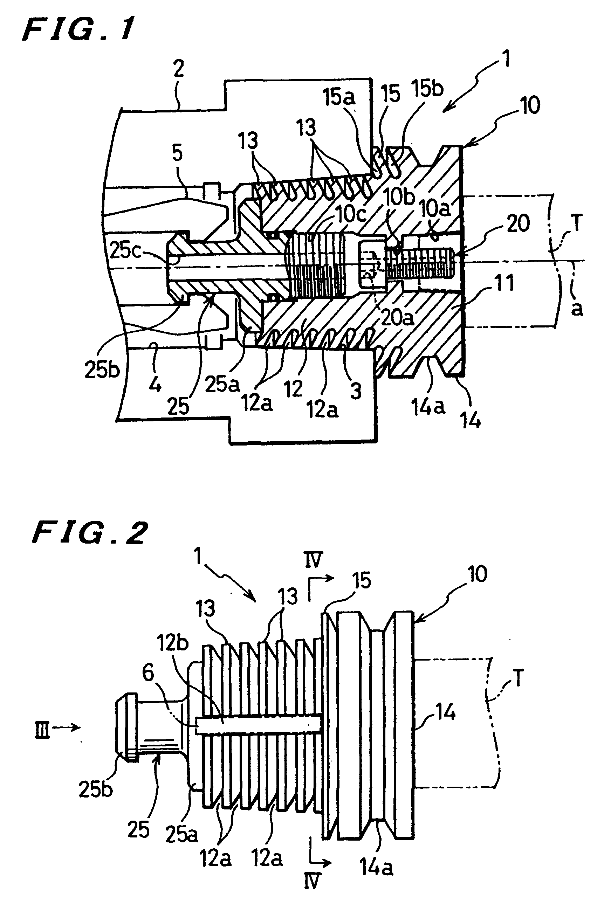

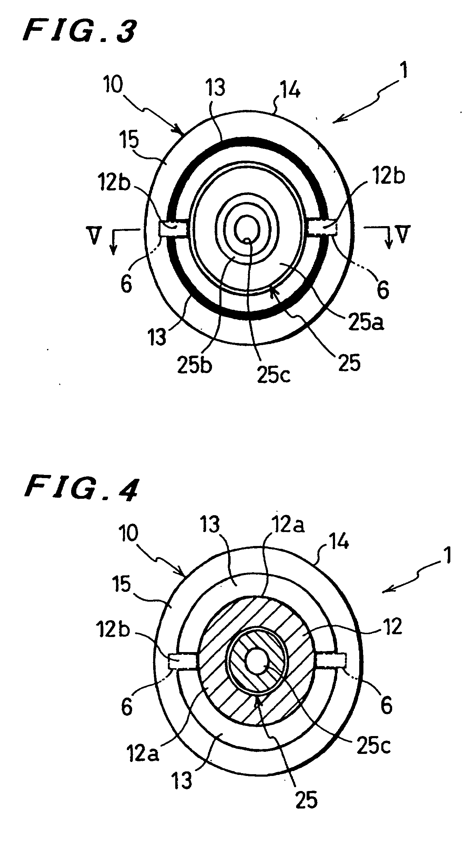

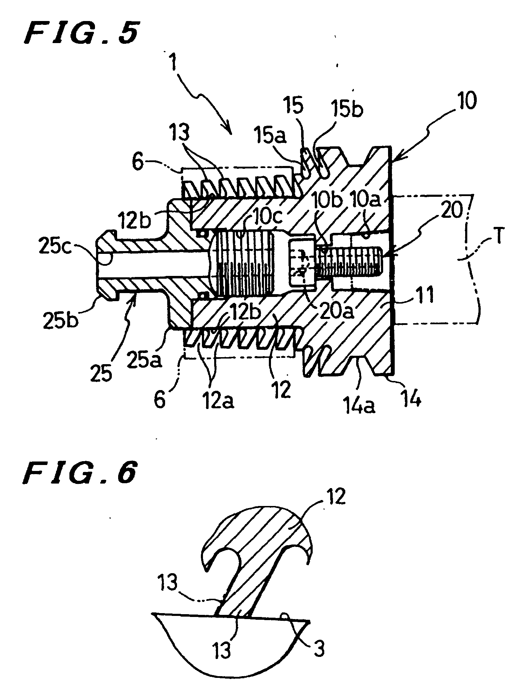

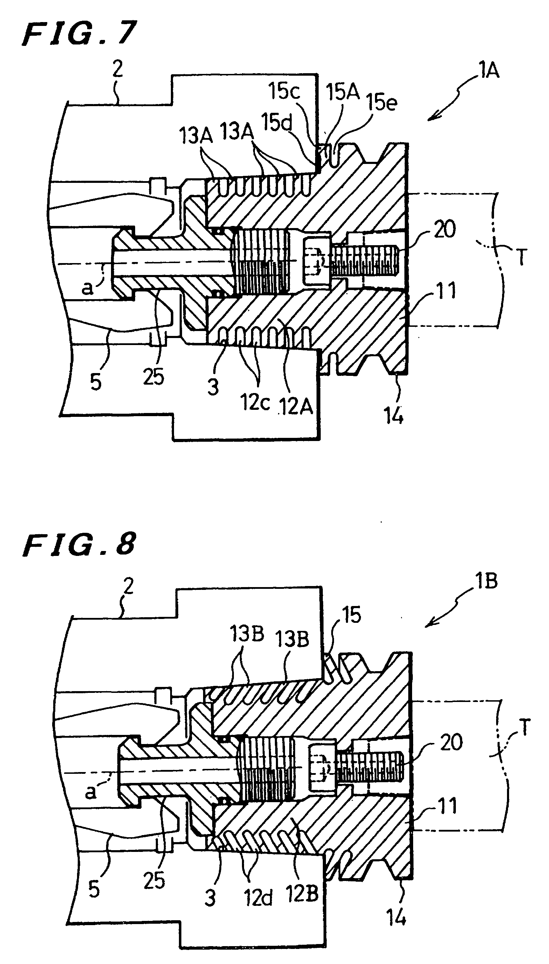

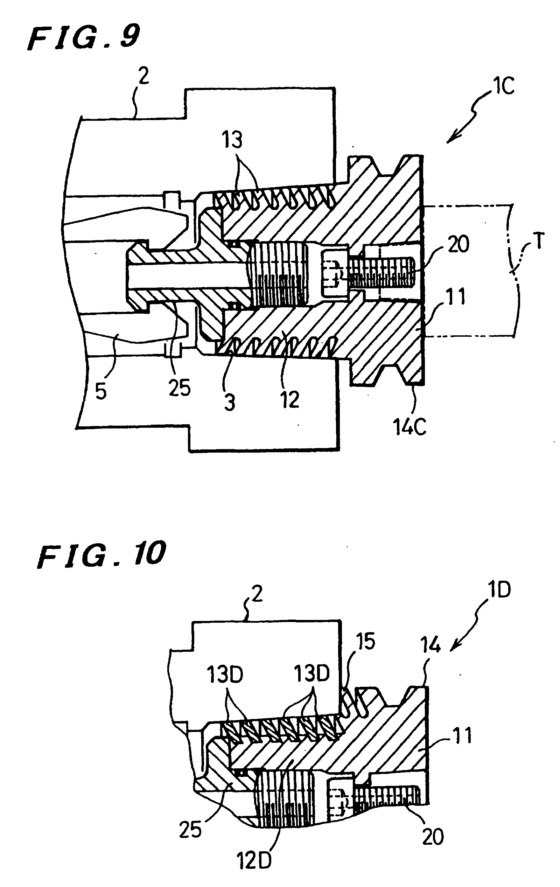

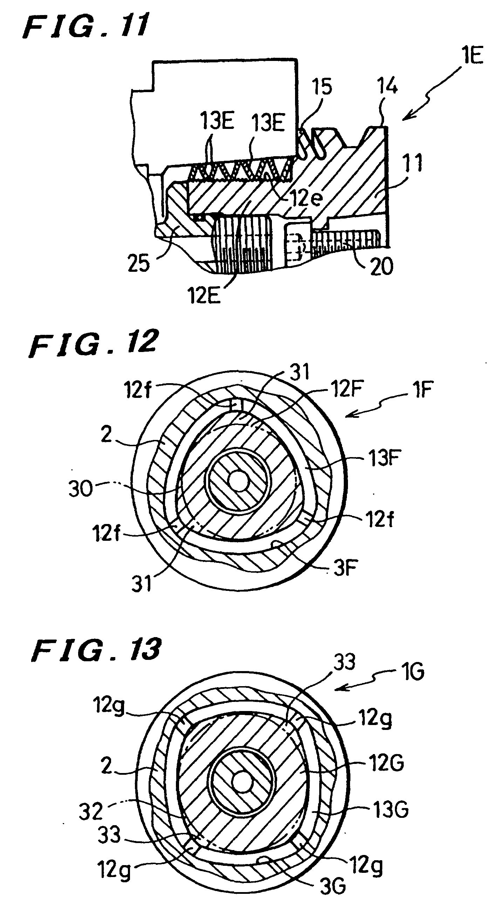

Fig. 1 through Fig. 6 are drawings relating to a main embodiment of the present invention. Fig. 1 is a vertical cross-section drawing of a tool holder including a section of a main shaft. Fig. 2 is a side-view drawing of the tool holder from Fig. 1. Fig. 3 is a drawing of Fig. 2 as seen from the direction indicated by arrow III. Fig. 4 is a cross-section drawing along the IV-IV line in Fig. 2. Fig. 5 is a cross-section drawing along the V-V line in Fig. 3. Fig. 6 is a detail drawing of an elastic engagement piece. Fig. 7 through Fig. 13 are drawings relating to alternative embodiments. Fig. 7 through Fig. 9 are vertical cross-section drawings of tool holders including a section of a main shaft. Fig. 10 and Fig. 11 are schematic vertical cross-section drawings of tool holders including a section of a main shaft. Fig. 12 and Fig. 13 are vertical cross-section drawings of a tool holder and main shaft cut along a plane perpendicular to the axial center.

### Preferred embodiments of the invention

Referring to the figures, the following is a description of the embodiments of the present invention.

This embodiment presents an example of the present invention implemented as a tool holder used in a machine tool for a machining center or the like equipped with an automatic tool changer device.

Referring to Fig. 1, there is shown a tool holder 1 mounted on a main shaft 2 of a machine tool. A tapered hole 3 that is larger at the end is formed at the end of the main shaft 2. The axial center of the tapered hole 3 is aligned with an axis a of the main shaft 2. The end surface of the main shaft 2 is formed as a flat surface perpendicular to the axis a. A holding hole 4 continuous with the tapered hole 3 is formed inside the main shaft 2. A collet 5, held in the holding hole 4, is disposed at the end of a draw bar of a retraction mechanism used to retract and secure a shank 12 of the tool holder 1 in the tapered hole 3 of the main shaft 2.

Referring to Fig. 1 through Fig. 5, the tool holder 1 includes a main holder unit 10, a locking bolt 20, and a pull stud 25. The main holder unit 10 includes a tool support 11 for attaching a tool T, the shank 12 removably fitted and secured to the tapered hole 3, a plurality of elastic engagement pieces 13 disposed along the outer perimeter section of the shank 12, and a flange 14 having a larger diameter than that of the tapered hole 3. The tool support 11, the shank 12, the plurality of elastic engagement pieces 13, and the flange 14 are formed integrally.

Inside the main holder unit 10, a tapered hole 10a, an insertion hole 10b, and a threaded hole 10c are formed in series, going from the end to the base. The locking bolt 20 is inserted into the insertion hole 10b from the threaded hole 10c, and the threaded section thereof is projected into the tapered hole 10a. A connecting projection at the base of the tool T engages with the tapered hole 10a and meshes with the threaded bolt 20 so that it is locked to the tool holder 1. Thus, the tool support 11 is formed from the tapered hole 10a, the insertion hole 10b, the locking bolt 20, and the like.

The pull stud 25 meshes with the threaded hole 10c from the base end of the main holder unit 10, and a collar 25a thereof is abutted to the shank 12 so that it is secured. An engagement section 25b at the base end of the pull stud 25 is engaged with the collet 5 and draws the shank 12 by pulling the draw bar (not shown in the figure) to the left in Fig. 1. A hexagonal hole 20a is also formed to allow the end of a hexagonal wrench shaft to be engaged for pivoting of the locking bolt 20.

Referring to Fig. 1 through Fig. 5, the plurality of elastic engagement pieces 13 are disposed along the axial center at the outer perimeter of the shank 12. The elastic engagement pieces 13 abut the inner surface of the tapered hole 3 and are elastically deformable in the radial direction. A plurality of ring-shaped grooves 12a are formed at the outer perimeter section of the shank 12 and are positioned at predetermined axial intervals. The plurality of ring-shaped grooves 12a and the plurality of collar-shaped elastic engagement pieces 13 are alternately disposed along the axial direction. The plurality of ring-shaped grooves 12a are formed at the outer perimeter section of the shank 12 so that the plurality of elastic engagement pieces 13b are formed integrally with the shank 12.

The outer perimeter ends of the plurality of elastic engagement pieces 13 are sloped relative to the plane perpendicular with the axis of the shank 12 toward the narrower end of the tapered shape of the shank 12 (or the tapered hole 3). Each of the elastic engagement pieces 13 has a high elasticity constant, but tend to be more easily elastically deformed due to this slope. Also, the axial thickness of the elastic engagement pieces 13 is set to provide an appropriate elasticity constant. The plurality of elastic grooves 12a are also formed as sloped grooves oriented toward the narrower end of the tapered shape of the shank 12. In the engagement of the plurality of the elastic engagement pieces 13 into the tapered hole 3, the distance of the plurality of the elastic engagement pieces 13 from the axial center a is larger toward the end (toward the right side of Fig. 1). The bottoms of the plurality of ring-shaped grooves 12a are positioned so that they are at a roughly fixed radius from the axial center. Thus, the radial width of the plurality of the elastic engagement pieces 13 is longer toward the wider end of the taper of the shank 12. However, the elastic engagement piece 13 at the tip is formed between the ring-shaped groove 12a and a securing groove 15a, described later, and is slightly narrower.

At the outer perimeter section of the shank 12, two grooves 12b extend longitudinally along the shank 12 at symmetrical positions around the axial center. As a result, the elastic engagement pieces 13 are divided in two along the perimeter, and each section of the elastic engagement pieces 13 extend along an arc of approximately 170 degrees along the outer perimeter of the shank 12. Due to the two grooves 12b and the division in the elastic engagement pieces 13, the elastic engagement pieces 13 can be elastically deformed easily (the high elasticity constant is reduced). Two keys 6 are disposed in a fixed manner on the inner surface of the tapered hole 3 of the main shaft 2. When the tool holder 1 is mounted on the main shaft 2, these keys 6 engage with the two grooves 12b. This allows the rotational torque to be transferred via the two keys 6 from the main shaft 2 to the tool holder 1.

The outer perimeter section of the flange 14 is integrally formed with an engagement groove 14a that can engage with an arm of the automatic tool changing device. At the base end of the flange 14 is formed a ring-shaped elastic flange 15 having a high elasticity constant and that is elastically deformed toward the axial center when it abuts the end surface (the outer end surface) of the main shaft 2 when mounted on the main shaft 2. The elastic flange 15 is formed as a ring that is sloped toward the base side (to the left in Fig. 1) toward the outer perimeter. A ring-shaped groove 15a is formed at a radially inward position on the elastic flange 15 and a ring-shaped sloped groove 15b is formed at a radially outward position of the elastic flange 15. The groove 15a and the sloped groove 15b reduces the high elasticity constant of the elastic flange 15 and facilitates elastic deformation.

The operations and advantages of this tool holder 1 will be described.

When the shank 12 of the tool holder 1 is inserted into the tapered hole 3 of the main shaft 2, the collet 5 of the retraction mechanism forcibly draws in the shank 12 toward the base side. Referring to Fig. 6, when the plurality of the elastic engagement pieces 13 abut the inner surface of the tapered hole 3, as indicated by the solid lines, the plurality of elastic engagement pieces 13 are elastically deformed slightly in the radial direction, as indicated by the dotted lines. As a result, the shank 12 is fitted and secured to the tapered hole 3. By having the plurality of elastic engagement pieces 13 elastically deformed radially and abutted tightly against the tapered hole 3, the entire shank 12 is firmly and removably fitted against the inner surface of the tapered hole 3 with a uniform force across the entire shank 12.

Furthermore, when the tool holder 1 is mounted on the main shaft 2, the elastic flange 15 abuts the end surface of the main shaft 2 before the plurality of elastic engagement pieces 13 are abutted against the inner surface of the tapered hole 3. When the pull stud 25 is drawn in by the retraction mechanism, the elastic flange 15 is elastically deformed while the shank is drawn in to the left. The plurality of elastic engagement pieces 13 are elastically deformed radially, so that the elastic engagement pieces 13 are all fitted and secured tightly against the inner surface of the tapered hole 3. The elastic flange 15, which has a high elasticity constant, is also elastically deformed and is abutted against the end surface of the main shaft 2, allowing the tool holder 1 to be powerfully secured to the main shaft 2. As a result, small gaps between the main shaft 2 and the tool holder 1 are eliminated and the entire shank 12 is firmly fitted against the tapered hole 3. This prevents vibrations in the main shaft 2 and the tool holder 1 even if the main shaft 2 is rotated at a high speed, thus significantly improving machining precision. In particular, since the elastic flange 15 engages with the end surface of the main shaft 2 at a position where its radius from the axial center a is large, vibrations and flexure in the tool holder 1 is greatly reduced, thus providing improved stability in the tool holder 1.

Since the plurality of elastic engagement pieces 13 are positioned along the axis of the shank 12 at the outer perimeter, the entire shank 12 can be reliably secured against the inner surface of the tapered hole 3 with a uniform force. Since the plurality of ring-shaped rings 12 are formed at uniform intervals along the axis of the shank 12 at the outer perimeter, the plurality of collar-shaped elastic engagement pieces 13 can be formed integrally with the shank 12. This reduces the number of parts involved and simplifies the structure. The plurality of elastic engagement pieces 13 are sloped relative to planes perpendicular to the axial center, and two grooves 12b are formed at the outer perimeter of the shank 12 so that the elastic engagement pieces 13 are split. This allows the plurality of elastic engagement pieces 13 to have appropriate elasticity. Furthermore, the two grooves 12b formed at symmetrical positions relative to the axial center can be used as key grooves that fit against the keys 6 to provide a torque transfer link with the main shaft 2.

The plurality of elastic engagement pieces 13 are sloped at the outer perimeter toward the narrower end of the tapered shape of the shank 12. Referring to Fig. 6, this allows the plurality of elastic engagement pieces to be elastically deformed toward the narrower end of the tapered shape when the tool holder 1 is mounted in the tapered hole 3. In this state, the outer perimeter surfaces of the plurality of elastic engagement pieces 13 are tightly fitted against the inner surface of the tapered hole 3 via friction. Thus, the restorative force of the elastic engagement pieces 13 serve to move the tool holder 1 toward the base end. In other words, the retraction force drawing in the tool holder 1 is increased. As a result, the drive force of the retraction device can be reduced.

When the tool holder 1 is to be removed from the main shaft 2, the drive force of the retraction mechanism is stopped. The elastic restorative force of the elastic flange 15 causes the tool holder 1 to move slightly in the direction of release. This releases the elastic deformation of the plurality of elastic engagement pieces 13 so that the tool holder 1 can be removed with the arm of the automatic tool changer device. When necessary, the axial thickness of the elastic flange 15 can be increased. Also, the groove 15a can be eliminated if necessary.

It would also be possible to have the plurality of elastic engagement pieces 13 and the elastic flange 15 formed to abut the main shaft 2 roughly simultaneously when the tool holder 1 is mounted in the tapered hole 3. Alternatively, the plurality of elastic engagement pieces 13 can be formed to abut the main shaft 2 before the elastic flange 15.

The following is a description of alternative embodiments. Elements that are essentially identical to those from the main embodiment described above will be assigned identical numerals and the corresponding descriptions will be omitted.
1) Referring to Fig. 7, there is shown a tool holder 1A. A plurality of elastic engagement pieces 13A are formed parallel to a plane perpendicular with the axial center a of a shank 12A. A plurality of ring-shaped grooves 12c are formed at a predetermined axial interval at the outer perimeter section of the shank 12A so that they are parallel to a plane perpendicular with the axial center a of the shank 12A. This allows the elastic engagement pieces 13A to be formed integrally with the shank 12A. An elastic flanges 15A are formed parallel to a plane perpendicular with the axial center a of the shank 12A. An abutting piece 15c is formed at the outer perimeter end thereof. The abutting piece 15A is bent toward the base end and is capable of abutting the end surface of the main shaft 2. A ring-shaped groove 15d is formed at the base end of the elastic flange 15A. A ring-shaped groove parallel with a plane perpendicular with the axial center a of the shank 12A is formed at the end of the elastic flange 15A. This allows the elastic flange 15A and the flange 14 to be formed integrally. When the tool holder 1A is drawn in, a force perpendicular to the tapered hole 3 is applied to the outer perimeter surface of the elastic flange 15A. Thus, the elastic flange 15A is elastically deformed slightly in the radial direction.
2) Referring to Fig. 8, there is shown a tool holder 1B. A plurality of elastic engagement pieces 13B are formed so that they slope toward the wider end of the tapered shape of shank 12 relative to a plane perpendicular with the axial center a of the shank 12B. To allow the elastic engagement pieces 13B are formed integrally with the shank 12B, a plurality of ring-shaped grooves 12d are formed at the outer perimeter section of the shank 12B at a predetermined interval along the axial center so that they are sloped toward the wider end of the tapered shape of the shank 12B. When the tool holder 1B is fitted and secured in the tapered hole 3 of the main shaft 2, the plurality of elastic engagement pieces 13B are elastically deformed slightly in the radial direction. In this state, the elastic engagement pieces 13B apply a rightward force to the tool holder 1. This is useful for removing the tool holder 1 from the main shaft 2.
3) Referring to Fig. 9, there is shown a tool holder 1C wherein the elastic flange 15, the groove 15a, and the sloped groove 15b are eliminated from the tool holder 1 from the main embodiment described above.
4) Referring to Fig. 10, there is shown a tool holder 1D. A plurality of elastic engagement pieces are formed as a plurality of collar-shaped members 13D secured to ring-shaped grooves on the outer perimeter of a shank 12D. The plurality of collar-shaped members 13D are sloped toward the narrow end of the tapered shape of the shank 12B relative to a plane perpendicular to the axial center of the shank 12D. The collar-shaped members 13D can also be formed as rings. Also, a plurality of dividing bodies symmetrical relative to the axial center can be formed. Collar-shaped members that project in roughly the same direction as the elastic engagement pieces 13A or the elastic engagement pieces 13B can be used in place of the collar-shaped members 13D.
5) Referring to Fig. 11, there is shown a tool holder 1E. A plurality of elastic engagement pieces are formed as a plurality of ring-shaped disc springs 13E having a high elasticity constant and mounted on the outer perimeter of the shank 12E. The plurality of disc springs 12E are arranged to form a zig-zag cross-section pattern, with the ends of adjacent disc springs 13E touching each other. A knurled section 12e is formed at the outer perimeter of the shank 12E to provide a friction link with the inner ends of the plurality of disc springs 13E.
6) Referring to Fig. 12, a shank 12F includes a plurality of elastic engagement pieces 13F. The cross-sectional shape of a tapered hole 3F of the main shaft and the shank 12F along a plane perpendicular with the axial center of the shank 12F forms a non-circular triangular shape. This triangular shape is formed by three projections 31 formed at 120 degree intervals on the outside of an inscribed reference circle 30. These three projections 31 allow rotational torque to be transferred from the tapered hole 3F of the main shaft to the shank 12F without the use of keys. Three grooves 12f are formed at symmetrical positions relative to the axial center at the comers at the outer perimeter section of the shank 12F.
7) Referring to Fig. 13, a shank 12G includes a plurality of elastic engagement pieces 13G. The cross-sectional shape of a tapered hole 3G of the main shaft and the shank 12G along a plane perpendicular with the axial center of the shank 12G forms a non-circular four-sided shape. This four-sided shape is formed by four projections 33 formed at 90 degree intervals on the outside of an inscribed circle 32. As with the tool holder 1F in Fig. 12, these four projections 33 allow rotational torque to be transferred from the tapered hole 3G of the main shaft to the shank 12G without the use of keys. Four grooves 12g are formed at symmetrical positions relative to the axial center at the comers at the outer perimeter section of the shank 12G. Besides the non-circular shapes indicated in Fig. 12 and Fig. 13, the shape of the cross-section along a plane perpendicular to the axial center of the shank and the tapered hole can be other non-circular shapes that are symmetrical relative to the axial center.
8) The grooves formed on the elastic engagement pieces 13 - 13C can be omitted. Also, the number and thickness of the elastic engagement pieces, the regions along the perimeter on which the elastic engagement pieces are formed, and the like can be set up as appropriate.
9) Various other modifications may be effected on the embodiment and alternative embodiments described about without departing from the spirit of the present invention. The present invention can be implemented for tool holders used in various types of machining tools.

## Claims

1. In a tool holder including a tool support section for attaching a tool and a shank removably fitted and secured to a tapered hole of a main shaft of a machining tool,
a tool holder wherein:
a plurality of elastic engagement pieces is capable of abutting an inner surface of said tapered hole and being elastically deformed slightly in a radial direction are disposed at an outer perimeter section of said shank at a plurality of positions along an axial center; and
said shank is fitted to said tapered hole of said main shaft and is secured to said main shaft with said plurality of elastic engagement pieces elastically deformed in said radial direction.

2. A tool holder as described in claim 1. wherein:
a plurality of ring-shaped grooves are formed at said outer perimeter section of said shank at a predetermined interval along said axial center, said plurality of ring-shaped grooves and said plurality of elastic engagement pieces being arranged in an alternating manner along said axial center; and
said plurality of elastic engagement pieces are formed integrally with said shank by forming said plurality of ring-shaped grooves.

3. A tool holder as described in claim 2 wherein said elastic engagement pieces are sloped relative to a plane perpendicular to said axial center of said shank.

4. A tool holder as described in claim 3 wherein said elastic engagement pieces are sloped toward a narrower end of a tapered shape of said shank.

5. A tool holder as described in claim 2 wherein said elastic engagement pieces are formed parallel to a plane perpendicular to said axial center of said shank.

6. A tool holder as described in claim 4 wherein a plurality of grooves extending longitudinally along said shank are formed at said outer perimeter section of said shank in a symmetrical arrangement relative to said axial center.

7. A tool holder as described in any one of claim 1 through claim 6 wherein an elastic flange abuts an outer end surface of said main shaft and elastically deforms toward said axial center when said tool holder is mounted on said main shaft.

8. A tool holder as described in claim 7 wherein:
said elastic flange is formed with a ring shape;
a ring-shaped groove is formed at a radially inward position on said elastic flange; and
a ring-shaped sloped groove is formed at a radially outward position on said elastic flange.

9. A tool holder as described in claim 1 wherein said plurality of elastic engagement pieces are formed as a plurality of collar-shaped members secured to said outer perimeter section of said shank.

10. A tool holder as described in claim 1 wherein said plurality of elastic engagement pieces are formed as a plurality of flat springs mounted on said outer perimeter section of said shank.

11. A tool holder as described in claim 1 wherein a cross-section shape of said tapered hole and said shank along a plane perpendicular to said axial center forms a non-circular shape capable of transferring rotational torque so that rotational torque can be transferred from said tapered hole of said main shaft to said shank without using a key.
